# EUROPEAN PATENT SPECIFICATION

(11) **EP 3 641 169 B1**
(45) Date of publication and mention of the grant of the patent: **28.10.2026**
(21) Application number: 17918902.2
(22) Date of filing: 27.07.2017
(51) Int. Cl.: H04B 10/272, H04Q 11/00

(54) **DATA PROCESSING METHOD, OPTICAL LINE TERMINAL, OPTICAL NETWORK UNIT AND SYSTEM**
DATENVERARBEITUNGSVERFAHREN, OPTISCHES LEITUNGSENDGERÄT, OPTISCHE NETZWERKEINHEIT UND SYSTEM
PROCÉDÉ DE TRAITEMENT DE DONNÉES, TERMINAL DE LIGNE OPTIQUE, UNITÉ DE RÉSEAU OPTIQUE, ET SYSTÈME

(43) Date of publication of application: 22.04.2020
(73) Proprietor: Huawei Technologies Co., Ltd., Longgang District Shenzhen, Guangdong 518129 (CN)
(72) Inventor: JING, Lei, Shenzhen Guangdong 518129 (CN); NIE, Shiwei, Shenzhen Guangdong 518129 (CN); LI, Shengping, Shenzhen Guangdong 518129 (CN); GAO, Bo, Shenzhen Guangdong 518129 (CN)
(74) Representative: Gill Jennings & Every LLP
(86) International application number: PCT/CN2017/094602
(87) International publication number: WO 2019/019073

(56) References cited:
- WO-A1-2015/139412
- CN-A- 101 552 932
- CN-A- 101 616 339
- CN-A- 102 045 130
- US-A1- 2005 083 950
- US-A1- 2009 010 650
- US-A1- 2016 105 236
- KONSTANTINOS KANONAKIS ET AL: "Effects of adaptive subcarrier modulation on MAC operation in OFDMA-PONs", FUTURE NETWORK&MOBILE SUMMIT (FUTURENETW), 2011, IEEE, 15 June 2011 (2011-06-15), pages 1 - 9, XP032031028, ISBN: 978-1-4577-0928-9

## Description

### TECHNICAL FIELD

The present invention relates to the field of optical communications technologies, and in particular, to a data processing method, an optical line terminal, an optical network unit, and a system.

### BACKGROUND

The passive optical network (Passive Optical Network, PON) technology is a point-to-multipoint fiber access technology. The PON system may include an optical line terminal (Optical Line Terminal, OLT), an optical distribution network (Optical Distribution Network, ODN), and at least one optical network unit (Optical Network Unit, ONU). The OLT is connected to the ODN, and the ODN is connected to multiple ONUs.

General requirements for upgrading the PON system are as follows: ONU devices of users who have no upgrade requirements are not changed, ONU devices of users who have upgrade requirements are replaced with new ones, and the upgraded PON system is compatible with the ONUs that are not upgraded. To meet the foregoing requirements, in the prior art, a wavelength division multiplexing coexistence manner is generally used when a PON system is upgraded. To be specific, upstream and downstream wavelengths used for optical communication between an OLT and an ONU that is not upgraded are different from upstream and downstream wavelengths used for optical communication between the OLT and the upgraded ONU.

However, continuous PON development increasingly diversifies generations of ONUs in the PON system, and consequently more wavelengths are used in wavelength division multiplexing. As a result, it is complex to implement optical components on an OLT side and an ONU side, and an insertion loss is increased.
US 20090010650A1 discloses a passive optical network system and communication method therefor.
US 20160105236A1 discloses hitless, multi-rate optical transmission and reception. XP 32031028A discloses Effects of Adaptive Subcarrier Modulation on MAC Operation in OFDMA-PONs.

### SUMMARY

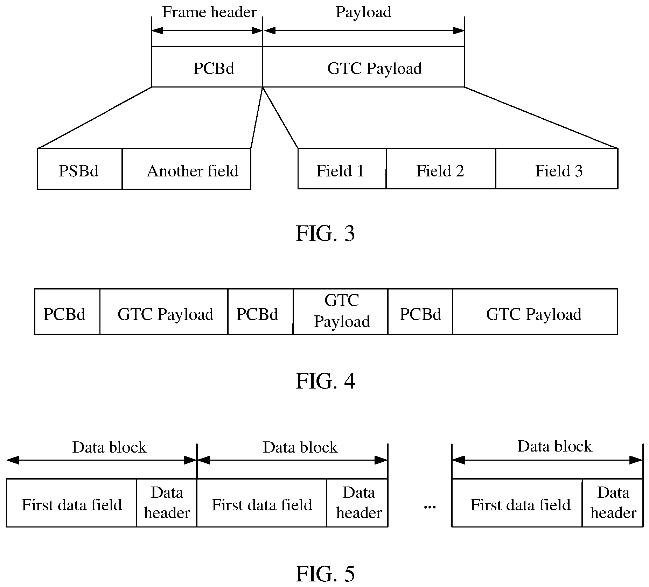

The scope of the present invention concerns the embodiment shown in fig.4 and is defined by the appended claims. Other embodiments, aspects or implementations discussed in the present description are related to the invention but are not covered by the subject-matter of the claims. Embodiments of the present invention provide a data processing method, an optical line terminal, an optical network unit, and a passive optical network system, so as to reduce complexity and an insertion loss of optical components in an upgraded PON system, thereby implementing a smooth upgrade.

According to a first aspect, a data processing method is provided. The method includes: generating, by an optical line terminal, downstream data, where the downstream data includes first indication information and at least two first data fields, the first indication information is used to indicate a modulation level of each first data field, a modulation level of any of the first data fields is corresponding to a modulation level of a destination device of the first data field, and the at least two first data fields include at least two first data fields at different modulation levels; modulating, by the optical line terminal, the downstream data, where each first data field is modulated based on a modulation level of the first data field, and the first indication information is modulated based on a modulation level of the first indication information; and sending, by the optical line terminal, the modulated downstream data on a same wavelength channel.

In the method provided in the first aspect, an ONU at each modulation level can correctly parse a first data field whose modulation level is the same as that of the ONU. Therefore, when ONUs at multiple modulation levels exist in an upgraded PON system, complexity and an insertion loss of optical components are reduced, thereby implementing a smooth upgrade.

According to the first aspect, in a first possible implementation of the data processing method, the generating, by an optical line terminal, downstream data includes: generating, by the optical line terminal, a downstream frame, where the downstream frame includes a frame header and a payload, the payload includes the first
data fields at at least two modulation levels, the frame header includes the first indication information, and the first indication information is specifically used to indicate a modulation level of each first data field in the payload. This implementation may be applied to a GPON.

According to the first possible implementation of the first aspect, in a second possible implementation of the data processing method, in all the first data fields in each downstream frame, the first data field at a lower modulation level is closer to the frame header. In this way, an ONU at each modulation level can correctly demodulate a first data field whose modulation level is the same as that of the ONU and all data that is before the first data field. A parsing process is not prone to an error, helping improve demodulation accuracy. The first indication information is specifically used to indicate a demarcation position between every two adjacent first data fields in the payload, so that overheads of the first indication information can be further effectively reduced.

According to the first or second possible implementation of the first aspect, in a third possible implementation of the data processing method, the modulating the first indication information based on the modulation level of the first indication information includes: converting the frame header based on a modulation level of the optical line terminal, and modulating the converted frame header, where a quantity of bauds of the frame header at a modulation level of the frame header before conversion is equal to a quantity of bauds of the converted frame header at the modulation level of the optical line terminal.

Specifically, the converting the frame header based on the modulation level of the optical line terminal includes:
converting each bit group in the frame header into a bit sequence including N bits, where
same bit groups are converted to a same bit sequence, and different bit groups are converted to different bit sequences; and a quantity of bits in each bit group in the frame header is a quantity of bits represented by each symbol period at the modulation level corresponding to the frame header, and N is a quantity of bits represented by each symbol period at the modulation level corresponding to the OLT.

Further, the modulation level of the frame header is a lowest level among the modulation levels of all the first data fields.

In this implementation, all ONUs in the PON system can correctly parse the frame header.

According to the first aspect, in a fourth possible implementation of the data processing method, the downstream data includes at least two data blocks, each data block includes a data header and the first data field at one modulation level, the data header includes the first indication information, and the first indication information is used to indicate the modulation level of the first data field in the data block. The implementation may be applied to an EPON. The data header may include a synchronization field. The synchronization field and the first indication information may be mutually independent fields. Alternatively, the first indication information is the synchronization field. That is, the synchronization field not only can be used for synchronization, but also can be used to indicate the modulation level of the first data field in the data block, which can effectively reduce data header overheads.

According to the fourth possible implementation of the first aspect, in a fifth possible implementation of the data processing method, the data header is modulated based on a modulation level of the data header. Specifically, the modulating the data header based on the modulation level of the data header includes converting the data header based on a modulation level of the OLT, and modulating the converted data header. A quantity of bauds of the data header at the modulation level of the data header before conversion is equal to a quantity of bauds of the converted data header at the modulation level of the OLT. The converting the data header based on a modulation level of the OLT includes converting each bit group in the data header into a bit sequence including N bits. Same bit groups are converted to a same bit sequence, and different bit groups are converted to different bit sequences; and a quantity of bits in each bit group in the data header is a quantity of bits represented by each symbol period at the modulation level corresponding to the data header, and N is a quantity of bits represented by each symbol period at the modulation level corresponding to the OLT. The modulation level corresponding to the data header may be a lowest level among the modulation levels corresponding to all the first data fields, so that all ONUs in the PON system can correctly parse the data header. Alternatively, the modulation level of the data header may be the same as a modulation level of a first data field corresponding to the data header.

According to the first aspect or any implementation of the first aspect, in a sixth possible implementation of the data processing method, the modulating each first data field based on a modulation level of each first data field includes:
in all the first data fields, if the modulation level of the first data field is lower than the modulation level of the optical line terminal, converting the first data field based on the modulation level of the optical line terminal, and modulating the converted first data field, where a quantity of bauds of the first data field at the modulation level of the first data field before conversion is equal to a quantity of bauds of the converted first data field at the modulation level of the optical line terminal; or
in all the first data fields, if the modulation level of the first data field is the same as the modulation level of the optical line terminal, modulating and sending the first data field.

In this implementation, a hardware structure of an ONU that is not upgraded in the PON system may not be changed, and the ONU that is not upgraded can still correctly demodulate data sent by the upgraded OLT to the ONU.

Specifically, the converting the first data field based on the modulation level of the optical line terminal includes:
converting each bit group in the first data field into a bit sequence including N bits, where
same bit groups are converted to a same bit sequence, and different bit groups are converted to different bit sequences; and a quantity of bits in each bit group in the first data field is a quantity of bits represented by each symbol period at the modulation level corresponding to the first data field, and N is a quantity of bits represented by each symbol period at the modulation level corresponding to the optical line terminal.

According to a second aspect, a data processing method is provided. The method includes: receiving, by an optical network unit, first indication information in downstream data sent by an optical line terminal, where the downstream data includes the first indication information and first data fields at at least two modulation levels, the first indication information is used to indicate a modulation level of each first data field, a modulation level of any of the first data fields is corresponding to a modulation level of a destination device of the first data field, and the at least two first data fields include at least two first data fields at different modulation levels; determining, by the optical network unit based on the first indication information, a first data field whose modulation level is the same as that of the optical network unit; and receiving and parsing, by the optical network unit, the determined first data field.

In the method provided in the second aspect, an ONU at each modulation level can correctly parse a first data field whose modulation level is the same as that of the ONU. Therefore, when ONUs at multiple modulation levels exist in an upgraded PON system, complexity and an insertion loss of optical components are reduced, thereby implementing a smooth upgrade.

According to the second aspect, in a first possible implementation of the data processing method, the receiving, by an optical network unit, first indication information in downstream data sent by an optical line terminal includes: receiving, by the optical network unit, a frame header in a downstream frame sent by the optical line terminal, where the downstream frame includes the frame header and a payload, the payload includes the first data fields at at least two modulation levels, the frame header includes the first indication information, and the first indication information is specifically used to indicate a modulation level of each first data field in the payload. This implementation may be applied to a GPON.

According to the first possible implementation of the second aspect, in a second possible implementation of the data processing method, in all the first data fields in each downstream frame, the first data field at a lower modulation level is closer to the frame header. In this way, an ONU at each modulation level can correctly demodulate a first data field whose modulation level is the same as that of the ONU and all data that is before the first data field. A parsing process is not prone to an error, helping improve demodulation accuracy. The first indication information is specifically used to indicate a demarcation position between every two adjacent first data fields in the payload, so that overheads of the first indication information can be further effectively reduced.

According to the first or second possible implementation of the second aspect, in a third possible implementation of the data processing method, for an ONU whose modulation level is higher than a modulation level of the frame header, the receiving, by an optical network unit, first indication information includes: demodulating, by the optical network unit, the frame header based on the modulation level of the optical network unit; and converting the demodulated frame header based on the modulation level of the frame header, where a quantity of bauds of the frame header at the modulation level of the ONU before conversion is equal to a quantity of bauds of the converted frame header at the modulation level of the frame header. In this way, the upgraded ONU can still correctly parse the frame header at the low modulation level. An ONU whose modulation level is the same as the modulation level of the frame header can directly parse the demodulated frame header, without a need to convert the demodulated frame header.

Specifically, the converting the demodulated frame header based on the modulation level of the frame header includes converting each bit group in the demodulated frame header into a bit sequence including M bits. A quantity of bits in each bit group is a quantity of bits represented by each symbol period at the modulation level corresponding to the ONU, and M is a quantity of bits represented by each symbol period at the modulation level of the frame header.

Further, the modulation level of the frame header is a lowest level among the modulation levels of all the first data fields.

In this implementation, all ONUs in the PON system can correctly parse the frame header.

According to the second aspect, in a fourth possible implementation of the data processing method, the downstream data includes at least two data blocks, each data block includes a data header and the first data field at one modulation level, the data header includes the first indication information, and the first indication information is used to indicate the modulation level of the first data field in the data block. The implementation may be applied to an EPON. The data header may include a synchronization field. The synchronization field and the first indication information may be mutually independent fields. Alternatively, the first indication information is the synchronization field. That is, the synchronization field not only can be used for synchronization, but also can be used to indicate the modulation level of the first data field in the data block, which can effectively reduce data header overheads.

According to the fourth possible implementation of the second aspect, in a fifth possible implementation of the data processing method, the ONU receives the data header in the data block sent by the OLT; the ONU determines, based on the first indication information, a first data field whose modulation level is the same as that of the ONU; and the ONU receives and parses the determined first data field. The ONU may directly parse the demodulated first data field, without a need to convert the demodulated first data field. The ONU may discard a first data field whose modulation level is different from that of the ONU. Alternatively, the ONU may not process a first data field whose modulation level is different from that of the ONU.

According to a third aspect, a data processing method is provided. The method includes: sending, by an ONU, upstream data to an OLT, where the upstream data includes a second data field and second indication information that is used to indicate a modulation level of the second data field.

In the method provided in the third aspect, when ONUs at multiple modulation levels exist in an upgraded PON system, each ONU indicates, by using the second indication information in the sent upstream data, a modulation level corresponding to the ONU. In this way, the OLT can correctly parse the upstream data sent by an ONU at each modulation level, in a parsing manner corresponding to the modulation level, thereby reducing complexity and an insertion loss of optical components and implementing a smooth upgrade.

According to the third aspect, in a first possible implementation of the data processing method, the ONU sends an upstream frame to the OLT. The upstream frame includes an upstream frame header and an upstream burst field. The upstream frame header includes the second indication information, and the upstream burst field includes the second data field. The upstream frame header may include a preamble field and a frame delimiter field.

According to the first possible implementation of the third aspect, in a second possible implementation of the data processing method, a field corresponding to the second indication information may be newly added to the upstream frame header. For example, the second indication information, the preamble field, and the frame delimiter field may be mutually independent fields. The second indication information indicates modulation levels by using different formats or different content.

According to the first possible implementation of the third aspect, in a third possible implementation of the data processing method, an existing field in the upstream frame header may be used as the second indication information. For example, the second indication information is a preamble field or a frame delimiter field. Upstream frame header overheads may be effectively reduced.

According to a fourth aspect, a data processing method is provided. The method includes: receiving, by the OLT, upstream data, where the upstream data includes a second data field and second indication information that is used to indicate a modulation level of the second data field, and specifically, the OLT receives an upstream frame, where the upstream frame includes an upstream frame header and an upstream burst field, the upstream frame header includes the second indication information, and the upstream burst field includes the second data field, and the upstream frame header may include a preamble field and a frame delimiter field; and determining, by the OLT, the modulation level of the second data field based on the second indication information, where the OLT determines the modulation level of the second data field in the upstream frame based on the second indication information in the upstream frame; and parsing, by the OLT, the second data field in a parsing manner corresponding to the modulation level of the second data field.

In the method provided in the fourth aspect, when ONUs at multiple modulation levels exist in an upgraded PON system, the OLT can correctly parse the upstream data sent by an ONU at each modulation level, in a parsing manner corresponding to the modulation level, thereby reducing complexity and an insertion loss of optical components and implementing a smooth upgrade.

According to the fourth aspect, in a first possible implementation of the data processing method, the parsing, by the OLT, the second data field in a parsing manner corresponding to the modulation level of the second data field specifically includes: if the modulation level of the second data field is lower than a modulation level of the OLT, converting the demodulated second data field based on the modulation level of the second data field, where a quantity of bauds of the second data field at the modulation level of the OLT before conversion is equal to a quantity of bauds of the converted second data field at the modulation level of the second data field, so that the upgraded OLT can still correctly parse the second data field at the low modulation level; and
if the modulation level of the second data field is the same as the modulation level of the OLT, directly parsing the demodulated second data field, without a need to convert the demodulated second data field.

Specifically, the converting the demodulated second data field based on the modulation level of the second data field includes converting each bit group in the demodulated second data field into a bit sequence including P bits. A quantity of bits in each bit group is a quantity of bits represented by each symbol period at the modulation level corresponding to the OLT, and P is a quantity of bits represented by each symbol period at the modulation level of the second data field.

According to a fifth aspect, an optical line terminal is provided. The optical line terminal includes: a processor, configured to generate downstream data, where the downstream data includes first indication information and at least two first data fields, the first indication information is used to indicate a modulation level of each first data field, a modulation level of any of the first data fields is corresponding to a modulation level of a destination device of the first data field, and the at least two first data fields include at least two first data fields at different modulation levels; and a transceiver, configured to modulate the downstream data, where each first data field is modulated based on a modulation level of the first data field, the first indication information is modulated based on a modulation level of the first indication information, and the transceiver is further configured to send the modulated downstream data. An ONU at each modulation level interacting with the optical line terminal can correctly parse a first data field whose modulation level is the same as that of the ONU. Therefore, when ONUs at multiple modulation levels exist in an upgraded PON system, complexity and an insertion loss of optical components are reduced, thereby implementing a smooth upgrade.

According to a sixth aspect, an optical network unit is provided. The optical network unit includes: a transceiver, configured to receive first indication information in downstream data sent by an optical line terminal, where the downstream data includes the first indication information and at least two first data fields, the first indication information is used to indicate a modulation level of each first data field, a modulation level of any of the first data fields is corresponding to a modulation level of a destination device of the first data field, and the at least two first data fields include at least two first data fields at different modulation levels; and a processor, configured to determine, based on the first indication information, a first data field whose modulation level is the same as that of the optical network unit, where the transceiver is further configured to receive the determined first data field, and the processor is further configured to parse the determined first data field. An ONU at each modulation level can correctly parse a first data field whose modulation level is the same as that of the ONU. Therefore, when ONUs at multiple modulation levels exist in an upgraded PON system, complexity and an insertion loss of optical components are reduced, thereby implementing a smooth upgrade.

According to a seventh aspect, an optical network unit is provided. The optical network unit includes a processor and a transceiver. The processor is configured to generate upstream data, and the upstream data includes a second data field and second indication information that is used to indicate a modulation level of the second data field. The transceiver is configured to send the upstream data to an OLT. When ONUs at multiple modulation levels exist in an upgraded PON system, each ONU indicates, by using the second indication information in sent upstream data, a modulation level corresponding to the ONU. In this way, the OLT can correctly parse the upstream data sent by an ONU at each modulation level, in a parsing manner corresponding to the modulation level, thereby reducing complexity and an insertion loss of optical components and implementing a smooth upgrade. Specifically, the ONU sends an upstream frame to the OLT.

According to an eighth aspect, an optical line terminal is provided. The optical line terminal includes a processor and a transceiver, and the transceiver is configured to demodulate and receive upstream data. Specifically, the transceiver demodulates and receives an upstream frame. The processor is configured to determine a modulation level of a second data field based on second indication information. That is, the processor determines the modulation level of the second data field in the upstream frame based on the second indication information in the upstream frame. The processor parses the second data field in a parsing manner corresponding to the modulation level of the second data field.

According to the optical line terminal provided in the eighth aspect, when ONUs at multiple modulation levels exist in an upgraded PON system, the OLT can correctly parse the upstream data sent by an ONU at each modulation level, in a parsing manner corresponding to the modulation level, thereby reducing complexity and an insertion loss of optical components and implementing a smooth upgrade.

According to a ninth aspect, a passive optical network system is provided. The passive optical network system includes: the optical line terminal according to the fifth aspect or the eighth aspect and the optical network unit according to the sixth aspect or the seventh aspect.

According to another aspect of this application, a computer-readable storage medium is provided. The computer-readable storage medium stores a computer software instruction used by the optical line terminal in according to the fifth aspect and/or the eighth aspect. When the computer software instruction is run on a computer, the computer is enabled to perform the methods according to the foregoing aspects.

According to still another aspect of this application, a computer-readable storage medium is provided. The computer-readable storage medium stores a computer software instruction used by the optical network unit according to the sixth aspect and/or the seventh aspect. When the computer software instruction is run on a computer, the computer is enabled to perform the methods according to the foregoing aspects.

### BRIEF DESCRIPTION OF DRAWINGS

To describe the technical solutions in the embodiments of the present invention more clearly, the following briefly describes the accompanying drawings required for describing the embodiments and the prior art. Apparently, the accompanying drawings in the following description show merely some embodiments of the present invention, and a person of ordinary skill in the art may still derive other drawings from these accompanying drawings without creative efforts. The scope of the invention is in any case defined by the appended claims.
FIG. 1 is a schematic architecture diagram of a PON system according to an embodiment of the present invention;
FIG. 2 is an example flowchart of a data processing method according to an embodiment of the present invention;
FIG. 3 is an example schematic structural diagram of a downstream frame according to an embodiment of the present invention;
FIG. 4 is another example schematic structural diagram of a downstream frame according to an embodiment of the present invention;
FIG. 5 is an example schematic structural diagram of downstream data according to an embodiment of the present invention;
FIG. 6 is an example flowchart of a data processing method according to another embodiment of the present invention;
FIG. 7 is an example schematic structural diagram of an upstream frame according to an embodiment of the present invention;
FIG. 8 is an example schematic structural diagram of hardware of an optical line terminal according to an embodiment of the present invention; and
FIG. 9 is an example schematic structural diagram of hardware of an optical network unit according to an embodiment of the present invention.

### DESCRIPTION OF EMBODIMENTS

To make the invention objectives, features, and advantages of the present invention clearer and more comprehensible, the following clearly and completely describes the technical solutions in the embodiments of the present invention with reference to the accompanying drawings in the embodiments of the present invention. Apparently, the embodiments described in the following are merely a part rather than all of the embodiments of the present invention. All other embodiments obtained by a person of ordinary skilled in the art based on the embodiments of the present invention without creative efforts shall fall within the protection scope of the present invention.

Technical solutions of the embodiments of the present invention may be applied to various passive optical networks, for example, a Gigabit passive optical network (Gigabit Passive Optical Network, GPON), an Ethernet passive optical network (Ethernet Passive Optical Network, EPON), a 10-Gigabit passive optical network (10-Gigabit-capable Passive Optical Network, XG-PON), a next-generation passive optical network (Next Generation Passive Optical Network, NGPON), and the like.

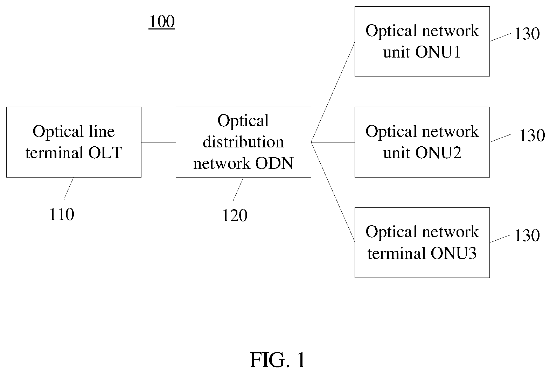

FIG. 1 is a schematic architecture diagram of a PON system to which a data processing method according to an embodiment of the present invention is applied. As shown in FIG. 1, the PON system 100 includes at least one OLT 110, at least one ODN 120, and multiple ONUs 130. The OLT 110 provides a network-side interface for the PON system 100, and the ONU 130 provides a user-side interface for the PON system 100, and is connected to the ODN 120. If the ONU 130 directly provides a user interface function, the ONU 130 is referred to as an optical network terminal (Optical Network Terminal, ONT). For ease of description, the ONUs 130 mentioned below collectively refer to the ONT that can directly provide the user interface function and the ONU that can provide a user-side interface. The ODN 120 is a network including an optical fiber and a passive optical splitter, and is configured to connect the OLT 110 device and the ONU 130 device to distribute or multiplex data signals between the OLT 110 and the ONU 130.

In the PON system 100, a direction from the OLT 110 to the ONU 130 is defined as a downstream direction, and a direction from the ONU 130 to the OLT 110 is defined as an upstream direction. In the downstream direction, the OLT 110 broadcasts downstream data in a time division multiplexing (Time Division Multiplexing, TDM) manner to the multiple ONUs 130 managed by the OLT 110, and each ONU 130 receives only data that carries an identifier of the ONU 130. In the upstream direction, the multiple ONUs 130 communicate with the OLT 110 in a time division multiple access (Time Division Multiple Access, TDMA) manner, and each ONU 130 sends upstream data strictly based on a time domain resource allocated to the ONU 130 by the OLT 110. By using the foregoing mechanism, a downstream optical signal sent by the OLT 110 is a continuous optical signal, and an upstream optical signal sent by the ONU 130 is a burst optical signal.

The PON system 100 may be a communications network system that does not require any active component to implement data distribution between the OLT 110 and the ONU 130. For example, in a specific embodiment, data distribution between the OLT 110 and the ONU 130 may be implemented by using a passive optical component (for example, an optical splitter) in the ODN 120. In addition, the PON system 100 may be a GPON system defined in the ITU-T G.984 standard, an Ethernet passive optical network (Ethernet Passive Optical Network, EPON) defined in the IEEE 802.3ah standard, or a next-generation passive optical network (NGPON), such as XGPON or 10G EPON. Various passive optical network systems defined in the foregoing standards all fall within the protection scope of the present invention.

The OLT 110 is usually located in a central office (Central Office, CO), and may centrally manage at least one ONU 130, and transmit data between the ONU 130 and an upper-layer network. Specifically, the OLT 110 may act as a medium between the ONU 130 and the upper layer network (for example, the Internet or a public switched telephone network (Public Switched Telephone Network, PSTN)), to forward data received from the upper-layer network to the ONU 130, and forward data received from the ONU 130 to the upper-layer network. A specific structure configuration of the OLT 110 may vary based on a specific type of the PON system 100. For example, in an embodiment, the OLT 110 may include a transmitter and a receiver. The transmitter is configured to send a downstream continuous optical signal to the ONU 130, and the receiver is configured to receive an upstream burst optical signal from the ONU 130. The downstream optical signal and the upstream optical signal may be transmitted by using the ODN 120. However, this embodiment of the present invention is not limited thereto.

The ONU 130 may be disposed at a user-side position (such as a customer premise) in a distributed manner. The ONU 130 may be a network device configured for communication between the OLT 110 and a user. Specifically, the ONU 130 may serve as a medium between the OLT 110 and the user. For example, the ONU 130 may forward data received from the OLT 110 to the user, and forward data received from the user to the OLT 110.

The ODN 120 may be a data distribution network, and may include a fiber, an optical coupler, an optical splitter, or another device. In an embodiment, the fiber, the optical coupler, the optical splitter, or the another device may be a passive optical component. Specifically, the fiber, the optical coupler, the optical splitter, or the another device may be a component that performs data signal distribution between the OLT 110 and the ONU 130 without a need of power support. Specifically, taking the optical splitter (Splitter) as an example, the optical splitter may be connected to the OLT 110 through a backbone optical fiber, and connected to the multiple ONUs 130 respectively through multiple branch optical fibers, thereby implementing a point-to-multipoint connection between the OLT 110 and the ONU 130. In addition, in another embodiment, the ODN 120 may further include one or more processing devices, for example, an optical amplifier or a relay device (Relay device). In addition, the ODN 120 may be specifically extended from the OLT 110 to the multiple ONUs 130, or may be configured in any other point-to-multipoint structure, which is not limited in this embodiment of the present invention.

During the upgrade of the PON system, it is generally required that ONU devices of users who have no upgrade requirements be not changed, and only ONU devices of users who have upgrade requirements be upgraded (for example, an ONU device of a higher modulation level is used). The OLT can be upgraded, and the upgraded PON system needs to be compatible with ONU devices that are not upgraded. A modulation level of an upgraded ONU device may be different from a modulation level of an ONU device that is not upgraded, for example, the modulation level of the upgraded ONU device is four-level pulse amplitude modulation (Pulse Amplitude Modulation-4, PAM4), and the modulation level of the ONU device that is not upgraded is non-return-to-zero code modulation (Non-Return to Zero, NRZ). If the modulation level of the OLT is PAM4, in downstream transmission, the OLT modulates and broadcasts downstream data by using PAM4, and the upgraded ONU device can correctly demodulate the downstream data, but the ONU device that is not upgraded cannot correctly demodulate the downstream data. In upstream transmission, the ONU that is not upgraded modulates and sends upstream data by using NRZ, and the upgraded ONU modulates and sends upstream data by using PAM4. The OLT cannot correctly demodulate the upstream data sent by the ONU that is not upgraded. If the modulation level of the OLT is NRZ, in downstream transmission, the OLT modulates and broadcasts downstream data by using NRZ, and the ONU device that is not upgraded can correctly demodulate the downstream data, but the upgraded ONU device cannot correctly demodulate the downstream data. In upstream transmission, the ONU that is not upgraded modulates and sends upstream data by using NRZ, and the upgraded ONU modulates and sends upstream data by using PAM4. The OLT cannot correctly demodulate the upstream data sent by the upgraded ONU.

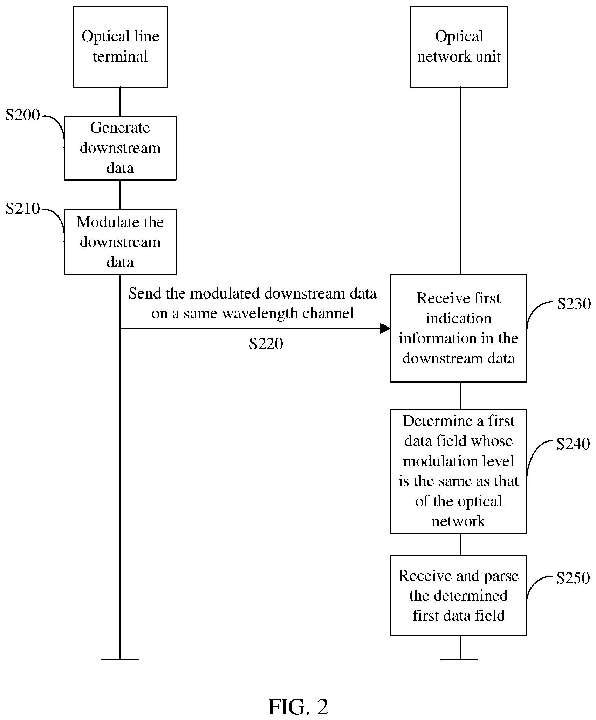

Therefore, the following provides a data processing method, aimed to implement, in an upgraded PON system, compatibility between an ONU that is not upgraded and an upgraded ONU without using a wavelength division multiplexing manner, that is, compatibility between ONUs at different modulation levels in the PON system. For example, it is assumed that the PON system before an upgrade is a 25G PON system, the ONU and the OLT in the PON system before the upgrade both use NRZ modulation, bit rates on the OLT side and the ONU side are 25G, and baud rates are 25G. The 25G PON system is upgraded to 50G. In the upgraded PON system, the OLT side can use PAM4 modulation, a baud rate is 25G, and a bit rate is 50G. The ONU that is not upgraded still uses NRZ modulation, a bit rate is 25G, and a baud rate is 25G. The upgraded ONU uses the PAM4 modulation mode, a baud rate is 25G, and a bit rate is 50G. According to the method provided in this embodiment of the present invention, the upgraded PON system can be compatible with both of the foregoing ONU that is not upgraded and the upgraded ONU. It should be understood that the foregoing upgrade from 25G to 50G is merely an example. The method provided in this embodiment of the present invention may also be applicable to an upgrade between other levels, for example, an upgrade from 1G to 50G, and an upgrade from 10G to 50G. The following describes in detail a data processing method provided in an embodiment of the present invention with reference to the accompanying drawings. As shown in FIG. 2, the method includes the following steps.

S200. An OLT generates downstream data, where the downstream data includes first indication information and at least two first data fields, and the first indication information is used to indicate a modulation level of each first data field. A modulation level of any of the first data fields is corresponding to a modulation level of a destination device of the first data field, and the at least two first data fields include at least two first data fields at different modulation levels.

In this embodiment of the present invention, the modulation level of the first data field is a modulation level of a destination ONU of the first data field, or may be understood as a modulation level of an ONU corresponding to an ONU identifier carried in the first data field. As shown in FIG. 1, it is assumed that a modulation level of an ONU1 is NRZ, a modulation level of an ONU2 is PAM4, and a modulation level of an ONU3 is PAM8. A modulation level of a first data field sent to the ONU1 is NRZ, a modulation level of a first data field sent to the ONU2 is PAM4, and a modulation level of a first data field sent to the ONU3 is PAM8.

Each first data field is corresponding to one modulation level, and first data fields at a same modulation level may be distributed at different positions in the downstream data.

S210. The OLT modulates the downstream data. Each first data field is modulated based on a modulation level of the first data field, and the first indication information is modulated based on a modulation level of the first indication information.

S220. The OLT sends the modulated downstream data on a same wavelength channel.

A first data field at each modulation level corresponds to a modulation mode, and the modulation mode enables an ONU whose modulation level is the same as that of the first data field to correctly demodulate the first data field.

The first indication information is also corresponding to a modulation mode, and the modulation mode enables all ONUs in a PON system to correctly demodulate the first indication information, or the modulation mode at least enables an ONU in the PON system whose modulation level is the same as that of the first indication information to correctly demodulate the first indication information.

A meaning of sending the downstream data on the same wavelength channel by the OLT is as follows: The OLT may send, on the same wavelength channel, the downstream data including the first indication information and the first data fields at at least two modulation levels. However, the OLT is not limited to always sending all downstream data on a same wavelength channel, and is not limited to sending all downstream data on a same wavelength channel. That is, the OLT may send downstream data on different wavelength channels, and may send, on a same wavelength channel, the downstream data including the first indication information and the first data fields at the at least two modulation levels.

Step S230: The ONU receives the first indication information in the downstream data sent by the OLT.

Step S240: The ONU determines, based on the first indication information, a first data field whose modulation level is the same as that of the ONU.

In this embodiment of the present invention, the ONU includes a transceiver, and the transceiver may include a transmitter. The modulation level of the ONU is a modulation level of the transmitter. For example, when the transmitter uses NRZ modulation, the modulation level of the ONU is NRZ.

Step S250: The ONU receives and parses the determined first data field.

The following implementations are provided based on different formats of the downstream data generated by the OLT:

### Implementation 1:

The implementation 1 may be applied to the foregoing GPON, NGPON, XGPON, and the like.

Step S200 includes generating a downstream frame by the OLT.

FIG. 3 is an example schematic structural diagram of a downstream frame according to an embodiment of the present invention. The downstream frame includes a frame header and a payload, and the payload includes the first data fields at at least two modulation levels. For example, the payload in FIG. 3 includes first data fields at three modulation levels: a field 1, a field 2, and a field 3. The frame header includes the first indication information, and the first indication information is used to indicate a modulation level of each first data field. The frame header in FIG. 3 includes a PSBd field and another field. The PSBd field may include, for example, a physical synchronization (Physical synchronization, Psync) field. The another field may include a BWmap (Bandwidth Map) field, a physical layer operation and maintenance (Physical Layer Operation and Maintenance, PLOAMd) field, and the like. The first indication information may be located in the PSBd field, or may be located in the another field in the frame header. The length of the downstream frame may be, for example, 125us. It may be understood that this is merely an example, and the downstream frame may also be of another length.

In an embodiment, the OLT and the ONU may pre-agree on an arrangement sequence of the first data fields at all the modulation levels in the payload. In this case, that the first indication information indicates a modulation level of each first data field may be: The first indication information only needs to indicate a position of each first data field in a payload, and the ONU may learn a modulation level of each first data field based on the first indication information, so that overheads of the first indication information can be further reduced. For example, the first data fields may be arranged in ascending order of modulation levels in the payload, that is, in the first data fields in each downstream frame, a first data field at a lower modulation level is closer to the frame header, as shown in FIG. 3. A modulation level of the field 1 may be NRZ, a modulation level of the field 2 may be PAM4, and a modulation level of the field 3 may be PAM8. It may be understood that a larger quantity of bits represented by each symbol period indicates a higher modulation level. When the modulation levels are sequentially arranged in ascending order, an ONU at each modulation level can correctly demodulate a first data field whose modulation level is the same as that of the ONU and all data that is before the first data field. A parsing process is not prone to an error, helping improve demodulation accuracy. In addition, the first data fields may also be sequentially arranged in a payload based on a descending order of modulation levels. Alternatively, an arrangement sequence other than the foregoing two sequences may be customized. For example, the modulation level of the field 1 may be PAM4, the modulation level of the field 2 may be PAM8, and the modulation level of the field 3 may be NRZ.

That the first indication information indicates a position of each first data field in the payload may be: In an embodiment, the first indication information is specifically used to indicate a demarcation position between every two adjacent first data fields in the payload, which may further effectively reduce overheads of the first indication information. As shown in FIG. 3, the first indication information may indicate a demarcation position between the field 1 and the field 2, and a demarcation position between the field 2 and the field 3. The ONU may learn a demarcation position between the frame header and the field 1 by reading the frame header. Specifically, a representation form of the demarcation position indicated by the first indication information may be: (1) The demarcation position is represented by indicating a quantity of FEC blocks. For example, to indicate the demarcation position between the field 1 and the field 2, a quantity of FEC blocks corresponding to a segment from the another field in the frame header to the tail of the field 1 may be indicated, or a quantity of FEC blocks of the field 1 may be indicated. (2) The demarcation position is represented by indicating a quantity of bits or a quantity of bauds. For example, to indicate the demarcation position between the field 2 and the field 3, a quantity of bits or a quantity of bauds corresponding to a segment from the another field in the frame header to the tail of the field 2 may be indicated, or a quantity of bits or bauds corresponding to the field 1 and a quantity of bits or bauds corresponding to the field 2 may be indicated. (3) The demarcation position is represented by indicating a quantity of bytes. For example, to indicate the demarcation position between the field 2 and the field 3, a quantity of bytes corresponding to a segment from the another field in the frame header to the tail of the field 2 may be indicated, or a quantity of bytes corresponding to the field 1 and a quantity of bytes corresponding to the field 2 may be indicated. In another embodiment, the first indication information is specifically used to indicate a star position and an end position of each first data field in the payload. For a representation form in which the first indication information indicates the start position and the end position, refer to the demarcation position, and details are not described herein again.

Alternatively, in another embodiment, the OLT and the ONU may not pre-agree on an arrangement sequence of the first data fields at all the modulation levels in the payload, but the first indication information indicates an arrangement sequence of the first data fields at all the modulation levels in the payload. In addition, the first indication information further indicates a position of each first data field in the payload. For specific details of further indicating, by the first indication information, a position of each first data field in the payload, refer to the foregoing description, and details are not described herein again.

FIG. 4 is another example schematic structural diagram of a downstream frame according to an embodiment of the present invention. The downstream frame includes at least two frame headers and at least two payloads, and one payload is correspondingly set behind each frame header. Each payload includes a first data field at one modulation level. For example, the downstream frame in FIG. 4 includes three frame headers and three payloads. The frame header includes the first indication information, and the first indication information is used to indicate a modulation level of each first data field. For detailed description of the frame header in FIG. 4, refer to FIG. 3, and details are not described herein again. Different from FIG. 3, the first indication information in the frame header in the downstream frame in FIG. 4 is used to indicate a modulation level of a first data field in a payload corresponding to the frame header. As shown in FIG. 4, first indication information in the first frame header is used to indicate a modulation level of a first data field in the first payload, and so on.

In an embodiment, the first indication information may be an existing field in the frame header. For example, the first indication information is an existing synchronization field in the frame header. The synchronization field may not only be used for synchronization, but also be used to indicate a modulation level of a first data field in a payload corresponding to the frame header, which can effectively reduce frame header overheads. Specifically, at least two synchronization fields may be defined, a quantity of synchronization fields is the same as a quantity of modulation levels of the ONUs in the PON system, and each synchronization field is corresponding to one modulation level.

In another embodiment, the first indication information may be a field newly added to the frame header. Multiple fields corresponding to the first indication information may be set, and each field of the first indication information is corresponding to one modulation level.

Alternatively, in addition to the foregoing two formats, the downstream frame may further use the following format: Each downstream frame includes one frame header and one payload, and one payload includes a first data field at one modulation level. The frame header includes the first indication information, and the first indication information is used to indicate the modulation level of the first data field in the downstream frame. For other detailed descriptions of this format, refer to the related descriptions of the frame format shown in FIG. 4, and details are not described herein again. The following description related to FIG. 4 is also applicable to this format.

Step S210 includes modulating the downstream frame by the OLT. Each first data field is modulated based on a modulation level of the first data field, and the frame header is modulated based on a modulation level of the frame header. It may be understood that the modulation level of the frame header may be the modulation level of the first indication information.

Step S220 includes sending the modulated downstream frame on a same wavelength channel by the OLT.

In an embodiment, the OLT may have at least two modulation levels. For example, a transmitter of the OLT may include transmit modules at multiple modulation levels, for example, may include a transmit module at an NRZ modulation level and a transmit module at a PAM4 modulation level. A quantity of modulation levels of the OLT may be the same as a quantity of modulation levels of the ONUs in the PON system. When sending the first data fields at different modulation levels, the OLT may switch between the modulation levels. For example, the PON system includes ONUs at three modulation levels: NRZ, PAM4, and PAM8. The OLT uses NRZ for a first data field to be sent to the ONU at the NRZ modulation level, uses PAM4 for a first data field to be sent to the ONU at the PAM4 modulation level, and uses PAM8 for a first data field to be sent to the ONU at the PAM8 modulation level. In this way, the ONU at the NRZ modulation level in the PON system can correctly demodulate the first data field modulated by using NRZ, the ONU at the PAM4 modulation level can correctly demodulate the first data field modulated by using PAM4, and the ONU at the PAM8 modulation level can correctly demodulate the first data field modulated by using PAM8.

In another embodiment, the OLT has only one modulation level, which can reduce complexity of the OLT. The modulation level of the OLT is a highest level among the modulation levels of the ONUs in the PON system. For example, if the PON system includes ONUs at three modulation levels: NRZ, PAM4, and PAM8, the modulation level of the OLT is PAM8. In the following description, an example in which the OLT has a highest modulation level among the modulation levels of the ONUs in the PON system is used.

The modulating each first data field based on a modulation level of each first data field in step S210 includes:
in all the first data fields, if the modulation level of the first data field is lower than the modulation level of the OLT, the first data field is converted based on the modulation level of the OLT, and the converted first data field is modulated. The modulation herein is that the OLT directly uses a transmitter for modulation. For example, if the transmitter uses PAM4 modulation, the OLT modulates the converted first data field by using the transmitter, and a baud quantity corresponding to the first data field at the modulation level of the first data field before conversion is equal to a baud quantity corresponding to the converted first data field at the modulation level of the OLT. In this embodiment, a hardware structure of an ONU that is not upgraded in the PON system may not be changed, and the ONU that is not upgraded can still correctly demodulate data sent by the upgraded OLT to the ONU.

It is assumed that the first data field before conversion is n1 bits, and the converted first data field is n2 bits, a quantity of bauds obtained by modulating the first data field of the n1 bits before conversion based on the modulation level of the first data field is equal to a quantity of bauds obtained by modulating the converted first data field of the n2 bits based on the modulation level of the OLT. For example, it is assumed that the modulation level of the first data field is NRZ, and the first data field before conversion is 1024 bits. Each symbol period represents one bit at the NRZ modulation level, and therefore 1024 bauds are obtained by modulating the first data field before conversion based on NRZ. It is assumed that the modulation level of the OLT is PAM4. If the converted first data field is modulated based on PAM4, 1024 bauds should also be obtained. Each symbol period represents two bits at the PAM4 modulation level, and therefore the converted first data field is 2048 bits.

Specifically, the converting the first data field based on the modulation level of the OLT includes:
converting each bit group in the first data field into a bit sequence including N bits.

Same bit groups are converted to a same bit sequence, and different bit groups are converted to different bit sequences; and a quantity of bits in each bit group in the first data field is a quantity of bits represented by each symbol period at a modulation level of the first data field, and N is a quantity of bits represented by each symbol period at the modulation level corresponding to the OLT.

For example, the modulation level of the first data field is NRZ, and the modulation level of the OLT is PAM4. Each symbol period represents one bit at the NRZ modulation level, and therefore each bit group in the first data field is one bit. Each symbol period represents two bits at the PAM4 modulation level, and therefore a value of N is two. That is, one bit in the first data field may be converted into two bits. The conversion relationship may be shown in, for example, the following Table 1.

**Table 1**

| Before conversion | After conversion |
|---|---|
| 0 | 00 |
| 1 | 11 |

For example, it is assumed that the first data field is 01001101, and the converted first data field is 0011000011110011.

The OLT modulates the converted first data field. The modulation level of the OLT is PAM4, and therefore every two bits are modulated into one baud. The ONU at the NRZ modulation level performs demodulation directly. Due to noise interference, level signals received by the ONU at the NRZ modulation level may not only include level signals corresponding to 00 and 11 at the PAM4 modulation level, but also include level signals corresponding to 01 and 10. The ONU at the NRZ modulation level may demodulate a received level signal corresponding to 01 to 0, and demodulate a received level signal corresponding to 10 to 1.

For example, the modulation level of the first data field is PAM4, and the modulation level of the OLT is PAM8. Each symbol period at the PAM4 modulation level represents two bits, and therefore each bit group in the first data field is two bits. Each symbol period represents three bits at the PAM8 modulation level, and therefore a value of N is 3. In other words, every two bits in the first data field may be converted into three bits. The conversion relationship may be shown in, for example, the following Table 2.

**Table 2**

| Before conversion | After conversion |
|---|---|
| 00 | 000 |
| 01 | 010 |
| 10 | 101 |
| 11 | 111 |

For example, assuming that the first data field is 01001101, the first data field may be successively divided into four bit groups from front to back: 01, 00, 11, and 01. Based on Table 2, the four bit groups are respectively converted into 010, 000, 111, and 010. Therefore, the converted first data field is: 010000111010. The OLT modulates the converted first data field. The modulation level of the OLT is PAM8, and therefore every three bits are modulated into one baud. The ONU at the PAM4 modulation level performs demodulation directly.

In an embodiment, a rule for converting a bit group into a bit sequence may be: A numerical value ranking of each bit group in all bit groups is equal to a numerical value ranking of a bit sequence converted from the bit group in all bit sequences. For example, in Table 2, a numerical value ranking of the bit group 01 in all the bit groups is 2, a bit sequence converted from the bit group 01 is 010, and a ranking of the bit sequence 010 in all the bit sequences (000, 010, 101, 111) is also 2. Similarly, bit groups 00, 11, and 11 also meet the rule. In this embodiment, an ONU whose modulation level is the same as that of the first data field can perform demodulation more conveniently. Without performing any conversion, the ONU can directly perform demodulation correctly according to an existing rule.

In all the first data fields, if the modulation level of the first data field is the same as the modulation level of the OLT, the first data field is directly modulated and sent. An ONU whose modulation level is the same as that of the first data field may directly and correctly perform demodulation.

The modulating the frame header based on the modulation level of the frame header in step S210 includes:
converting the frame header based on the modulation level of the OLT, and modulating the converted frame header, where the modulation herein is that the OLT directly performs modulation by using the transmitter, and for example, if the transmitter uses PAM4 modulation, the OLT modulates the converted frame header by using the transmitter, where a quantity of bauds of the frame header at the modulation level of the frame header before conversion is equal to a quantity of bauds of the converted frame header at the modulation level of the OLT.

Specifically, the converting the frame header based on the modulation level of the OLT includes:
converting each bit group in the frame header into a bit sequence including N bits.

Same bit groups are converted to a same bit sequence, and different bit groups are converted to different bit sequences, and a quantity of bits in each bit group in the frame header is a quantity of bits represented by each symbol period at the modulation level corresponding to the frame header, and N is a quantity of bits represented by each symbol period at the modulation level corresponding to the OLT.

When the format shown in FIG. 3 is used for the downstream frame, the modulation level of the frame header is a lowest level among the modulation levels of all the first data fields. In this way, all ONUs in the PON system can correctly parse the frame header.

When the format shown in FIG. 4 is used for the downstream frame, the modulation level of the frame header may be a lowest level among modulation levels of all the first data fields, or the modulation level of the frame header may be the same as the modulation level of the first data field corresponding to the frame header.

For specific details of modulating the frame header based on the modulation level of the frame header, refer to the description of the first data field, and details are not described herein again.

Step S230 includes receiving, by the ONU, the frame header in the downstream frame sent by the OLT.

The PON system has ONUs at multiple modulation levels, and different ONUs process frame headers in different manners.

When the format shown in FIG. 3 is used for a downstream frame, an ONU whose modulation level is higher than the modulation level of the frame header can convert the demodulated frame header based on the modulation level of the frame header. A quantity of bauds of the frame header at the modulation level of the ONU before conversion is equal to a quantity of bauds of the converted frame header at the modulation level of the frame header. In this way, the upgraded ONU can still correctly parse the frame header at the low modulation level.

Specifically, the converting the demodulated frame header based on the modulation level of the frame header includes converting each bit group in the demodulated frame header into a bit sequence including M bits. A quantity of bits in each bit group is a quantity of bits represented by each symbol period at the modulation level corresponding to the ONU, and M is a quantity of bits represented by each symbol period at the modulation level of the frame header.

For example, the modulation level of the frame header is NRZ, and the modulation level of the OLT is PAM4. For a conversion rule used when the OLT sends the frame header, refer to the foregoing Table 1. For a rule in which the ONU at the PAM4 modulation level converts the demodulated frame header based on the modulation level of the frame header, refer to the following Table 3. Due to noise interference, the demodulated frame header may include a bit group 01 and a bit group 11. The bit group 01 may be converted into 0, and the bit group 11 may be converted into 1, so as to eliminate the interference.

**Table 3**

| Before conversion | After conversion |
|---|---|
| 00 | 0 |
| 01 | 0 |
| 10 | 1 |
| 11 | 1 |

For example, the frame header sent from the OLT side is 01001101, and the frame header is first converted into 0011000011110011 based on Table 1 before sending. In a transmission process, it is assumed that a first bit group 00 changes to 01 due to noise interference, the ONU at the PAM4 modulation level demodulates the frame header based on the PAM4 modulation level, and a demodulated frame header is 0111000011110011. Based on Table 3, the demodulated frame header may be converted into 01001101. In this way, the ONU at the PAM4 modulation level can correctly parse the frame header.

An ONU whose modulation level is the same as the modulation level of the frame header can directly parse the demodulated frame header, without a need to convert the demodulated frame header. For example, the frame header sent from the OLT side is 01001101, and the frame header is first converted into 0011000011110011 based on Table 1 before sending. The modulation level of the ONU is the same as the modulation level of the frame header (it is assumed that the modulation level is NRZ), and when the ONU performs demodulation, one baud is correspondingly demodulated into one bit. For a frame header 0011000011110011 sent by the OLT, one baud is sent for two bits. Therefore, the ONU at the NRZ modulation level may directly parse out the demodulated frame header.

When the format shown in FIG. 4 is used for the downstream frame, if the modulation level of the frame header is a lowest level among the modulation levels of all the first data fields, the ONU may convert all frame headers in the downstream frame based on the modulation level of the frame header. If the modulation level of the frame header is the same as the modulation level of the first data field corresponding to the frame header, the ONU may convert all frame headers in the downstream frame based on the modulation level of the ONU. Only a frame header whose modulation level is the same as that of the ONU can be parsed correctly, and the ONU can distinguish a correctly parsed frame header.

Step S240 includes determining, by the ONU based on the first indication information, a first data field whose modulation level is the same as that of the ONU.

Step S250 includes receiving and parsing the determined first data field by the ONU.

In an embodiment, the ONU receives and parses all first data fields in the downstream frame whose modulation levels are the same as that of the ONU. Before sending the downstream frame, the OLT performs FEC encoding for the entire downstream frame. FEC encoding is separately performed on data at different modulation levels in the downstream frame. First data fields at a same modulation level may include data sent to multiple ONUs, but the data sent to the multiple ONUs undergoes FEC encoding together. Therefore, each ONU needs to receive all first data fields in the downstream frame whose modulation levels are the same as that of the ONU, perform FEC decoding for the received data, and then determine, based on an identifier of the ONU, data sent to the ONU in a first data field that has undergone FEC decoding.

In another embodiment, the ONU receives and parses a first data field sent to the ONU in the determined first data fields. Before sending the downstream frame, the OLT performs FEC encoding for the entire downstream frame. FEC encoding is separately performed for data to be sent to different ONUs. Each ONU only needs to receive data sent to the ONU in the downstream frame, and performs FEC decoding for the received data.

In an embodiment, an ONU may discard data sent to another ONU in the payload. Alternatively, the ONU may not process data sent to another ONU in the payload.

### Implementation 2:

For example, the implementation 2 may be applied to the foregoing EPON.

The downstream data includes at least two data blocks.

As shown in FIG. 5, the downstream data includes several data blocks. The downstream data may be a data block stream, and the OLT continuously sends data blocks to form the data block stream. Each data block includes a data header and the first data field at one modulation level, the data header includes the first indication information, and the first indication information is used to indicate the modulation level of the first data field in the data block.

It may be understood that the data header may be located at a tail of the data block, or may be located at a head of the data block.

For example, the PON system includes ONUs at three modulation levels that are respectively NRZ, PAM4, and PAM8, and accordingly the downstream data may include three different data blocks. A modulation level indicated by first indication information of a first data block is NRZ, a modulation level indicated by first indication information of a second data block is PAM4, and a modulation level indicated by first indication information of a third data block is PAM8.

The data header may include a synchronization field. The ONU may perform synchronization based on the synchronization field. The synchronization field may be an FEC synchronization field. If an FEC synchronization state machine matches the synchronization field, it may be determined that the FEC synchronization state machine and the synchronization field are synchronous.

In an embodiment, the synchronization field and the first indication information may be mutually independent fields. Only one synchronization field may be set, and all the ONUs in the PON system perform synchronization based on the synchronization field. Multiple fields corresponding to the first indication information may be set, and each field of the first indication information is corresponding to one modulation level. For example, it is assumed that the PON system includes ONUs at two modulation levels: NRZ and PAM4, the synchronization field may be 1001, and fields corresponding to the first indication information may be 0000 and 1111, where 0000 represents the NRZ modulation level, and 1111 represents the PAM4 modulation level. The data header may be of two types: 10010000 and 10011111. When receiving the data header 10010000, an ONU at the NRZ modulation level may perform synchronization based on the synchronization field 1001, then determine, based on the first indication information 0000, that a modulation level of a first data field in this data block is the same as that of the ONU, and further parse the first data field in the data block. When receiving the data header 10011111, the ONU at the NRZ modulation level may perform synchronization based on the synchronization field 1001, and then determine, based on the first indication information 1111, that a modulation level of a first data field in this data block is different from that of the ONU, and does not need to parse the first data field in the data block.

In another embodiment, the first indication information is the synchronization field. In other words, the synchronization field not only can be used for synchronization, but also can be used to indicate the modulation level of the first data field in the data block, which can effectively reduce data header overheads. Specifically, at least two synchronization fields may be defined, a quantity of synchronization fields is the same as a quantity of modulation levels of the ONUs in the PON system, and each synchronization field is corresponding to one modulation level. If a synchronization state machine matches any synchronization field, it may be determined that the synchronization state machine and the synchronization field are synchronous. For example, if the PON system includes ONUs at two modulation levels, namely, NRZ and PAM4, two synchronization fields may be defined: a synchronization field A and a synchronization field B. The synchronization field A is used to indicate the NRZ modulation level, and the synchronization field B is used to indicate the PAM4 modulation level. After receiving a data block including the synchronization field A, an ONU at the NRZ modulation level may perform synchronization, then determine, based on the synchronization field A, that a modulation level of a first data field in the data block is the same as that of the ONU, and further parse the first data field in the data block. If receiving a data block including the synchronization field B, an ONU at the NRZ modulation level may determine, based on the synchronization field B, that a modulation level of a first data field in the data block is different from that of the ONU, and does not need to parse the first data field in the data block.

In an embodiment, the OLT may have at least two modulation levels. For details, refer to the description of the foregoing implementation 1, and details are not described herein again.

In another embodiment, the OLT has only one modulation level, which can reduce complexity of the OLT. The modulation level of the OLT is a highest level among the modulation levels of the ONUs in the PON system. In the following description, an example in which the OLT has a highest modulation level among the modulation levels of the ONUs in the PON system is used.

For the modulating each first data field based on a modulation level of each first data field in step S210, refer to the description in the implementation 1, and details are not described herein again.

In an embodiment, the data header is modulated based on a modulation level of the data header. Specifically, the data header is converted based on the modulation level of the OLT, and the converted data header is modulated. A quantity of bauds of the data header at the modulation level of the data header before conversion is equal to a quantity of bauds of the converted data header at the modulation level of the OLT. The converting the data header based on a modulation level of the OLT includes converting each bit group in the data header into a bit sequence including N bits. Same bit groups are converted to a same bit sequence, and different bit groups are converted to different bit sequences; and a quantity of bits in each bit group in the data header is a quantity of bits represented by each symbol period at the modulation level corresponding to the data header, and N is a quantity of bits represented by each symbol period at the modulation level corresponding to the OLT.

The modulation level corresponding to the data header may be a lowest level among the modulation levels corresponding to all the first data fields, so that all ONUs in the PON system can correctly parse the data header. Alternatively, the modulation level of the data header may be the same as a modulation level of a first data field corresponding to the data header.

For specific details of modulating the data header based on the modulation level of the data header, refer to the description of the first data field, and details are not described herein again.

Step S230 includes receiving, by the ONU, the data header in the data block sent by the OLT.

The PON system has ONUs at multiple modulation levels, and different ONUs process data headers in different manners. For details, refer to the manner for processing the frame header by the ONU in the implementation 1, and details are not described herein again.

Step S240 includes determining, by the ONU based on the first indication information, a first data field whose modulation level is the same as that of the ONU.

Step S250 includes receiving and parsing the determined first data field by the ONU. For details, refer to the implementation 1, and details are not described herein again.

According to the data processing method provided in the embodiment of the present invention, the OLT generates the downstream data including the first data fields at at least two modulation levels and the first indication information used to indicate a modulation level of each first data field; and the OLT modulates each first data field based on a modulation level of each first data field, and modulates the first indication information based on a modulation level of the first indication information, and may send the modulated downstream data on a same wavelength channel. An ONU at each modulation level can correctly parse a first data field whose modulation level is the same as that of the ONU. Therefore, when ONUs at multiple modulation levels exist in the upgraded PON system, a defect that an optical component is excessively complex and has an excessively large insertion loss due to use of a wavelength division multiplexing manner can be avoided, thereby implementing a smooth upgrade.

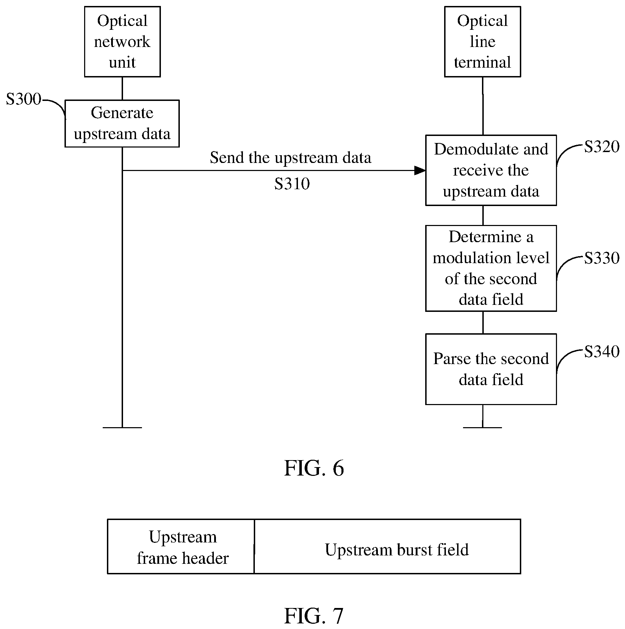

In the foregoing embodiment, a processing process of downstream transmission in the PON system is described. Processing for upstream transmission is described below. As shown in FIG. 6, the data processing method includes the following steps.

Step S300: The ONU generates upstream data.

Step S310: The ONU sends the upstream data to the OLT.

The upstream data includes a second data field and second indication information that is used to indicate a modulation level of the second data field.

Specifically, step S310 includes sending an upstream frame to the OLT by the ONU. FIG. 7 is an example schematic structural diagram of the upstream frame according to an embodiment of the present invention. The upstream frame includes an upstream frame header and an upstream burst field. The upstream frame header includes the second indication information, and the upstream burst field includes the second data field. FEC encoding may be performed for the upstream burst field. FEC encoding may not be performed for the upstream frame header. The upstream frame header may include a preamble field and a frame delimiter field.

In an embodiment, the second indication information, the preamble field, and the frame delimiter field may be mutually independent fields. A plurality of fields corresponding to the second indication information may be set, and the second indication information indicates modulation levels by using different formats or different content. An ONU at each modulation level uses a field corresponding to second indication information corresponding to a modulation level of the ONU. For example, it is assumed that the PON system includes ONUs at two modulation levels: NRZ and PAM4, and fields corresponding to the second indication information may be 0000 and 1111, where 0000 represents the NRZ modulation level, and 1111 represents the PAM4 modulation level. Second indication information sent by the ONU at the NRZ modulation level may be 0000; and second indication information sent by the ONU at the PAM4 modulation level may be 1111.

In another embodiment, the second indication information is a preamble field or a frame delimiter field. The preamble field is used as an example. In other words, the preamble field may be further used to indicate a modulation level of the second data field in the upstream frame, so that upstream frame header overheads can be effectively reduced. Specifically, two preamble fields may be defined, a quantity of synchronization fields is the same as a quantity of modulation levels of the ONUs in the PON system, and each preamble field is corresponding to one modulation level. For example, if the PON system includes ONUs at two modulation levels: NRZ and PAM4, two preamble fields may be defined: a preamble field A and a preamble field B. The preamble field A is used to indicate the NRZ modulation level, and the preamble field B is used to indicate the PAM4 modulation level. An ONU at the NRZ modulation level uses the preamble field A to send the upstream frame, and an ONU at the PAM4 modulation level uses the preamble field B to send the upstream frame.

Step S320: The OLT receives the upstream data. In other words, the OLT receives the upstream frame.

In an embodiment, the OLT may have at least two modulation levels. For details, refer to the description of the foregoing implementation 1, and details are not described herein again.

In another embodiment, the OLT has only one modulation level, which can reduce complexity of the OLT. The modulation level of the OLT is a highest level among the modulation levels of the ONUs in the PON system. In the following description, an example in which the OLT has a highest modulation level among the modulation levels of the ONUs in the PON system is used.

Step S330: The OLT determines a modulation level of the second data field based on the second indication information. To be specific, the OLT determines the modulation level of the second data field in the upstream frame based on the second indication information in the upstream frame.

The PON system includes ONUs at multiple modulation levels, and therefore the OLT may receive the upstream data sent by the ONUs at the multiple modulation levels. After second indication information to be sent by ONUs at all modulation levels is modulated by respective ONUs, corresponding baud-signals are different; Otherwise, the OLT cannot distinguish the second indication information sent by different ONUs. For example, assuming that the second indication information sent by the ONU at the NRZ modulation level is 01, and the modulation level of the OLT is PAM4, a demodulated signal is 0011. If the second indication information sent by the ONU at the PAM4 modulation level is 0011, a signal demodulated by the OLT is 0011. In this case, the OLT cannot distinguish the second indication information at the two modulation levels.

Step S340: The OLT parses the second data field in a parsing manner corresponding to the modulation level of the second data field.

Step S340 specifically includes: if the modulation level of the second data field is lower than the modulation level of the OLT, converting the demodulated second data field based on the modulation level of the second data field. A quantity of bauds of the second data field at the modulation level of the OLT before conversion is equal to a quantity of bauds of the converted second data field at the modulation level of the second data field. In this way, the upgraded OLT can still correctly parse the second data field at the low modulation level.

Specifically, the converting the demodulated second data field based on the modulation level of the second data field includes converting each bit group in the demodulated second data field into a bit sequence including P bits. A quantity of bits in each bit group is a quantity of bits represented by each symbol period at the modulation level corresponding to the OLT, and P is a quantity of bits represented by each symbol period at the modulation level of the second data field.

If the modulation level of the second data field is the same as the modulation level of the OLT, the demodulated second data field is directly parsed, without a need to convert the demodulated second data field.

For more detailed descriptions of step S340, refer to the descriptions of step S220, and details are not described herein again.

Further, based on the foregoing embodiments, the data processing method further includes: when the ONU registers, reporting, to the OLT, a highest modulation level that can be supported by the ONU. The highest modulation level that can be supported by the ONU is a modulation level of a modulation module of the ONU. For example, the modulation module in a transceiver of the ONU supports PAM4 modulation. Although the ONU may support PAM4 modulation and NRZ modulation (when NRZ modulation is supported, the downstream data may be obtained only after the foregoing conversion process is performed), the highest modulation level that can be supported by the ONU is PAM4.

Further, based on the foregoing embodiments, all the ONUs can implement registration and modulation format switching by using an existing online registration process.

It should be understood that the modulation level in all the embodiments of the present invention may be replaced with a data rate level, and the modulation level is corresponding to the data rate level. For example, the PAM4 modulation level is corresponding to a data rate level 50G. The NRZ modulation level is corresponding to a data rate level 25G. The PAM8 modulation level is corresponding to a data rate level 75G. It may be understood that another concept equivalent to the modulation level or the data rate level may also be replaced with the modulation level, provided that a meaning equivalent to the modulation level is expressed.

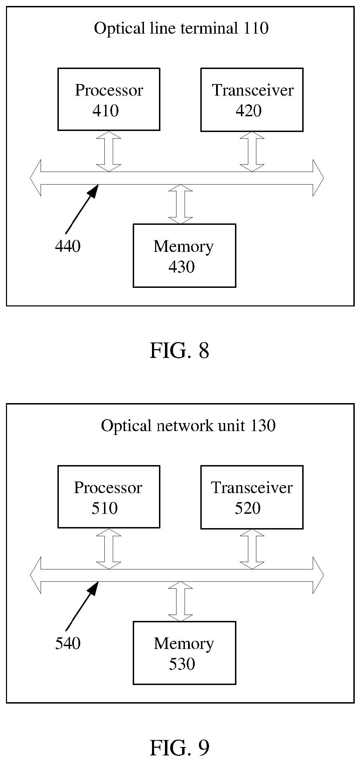

The present invention further provides the OLT 110 described in the foregoing embodiments. As shown in FIG. 8, the OLT 110 includes a processor 410 and a transceiver 420, and the transceiver 420 is connected to the processor 410. Optionally, the OLT 110 further includes a memory 430. The memory 430 is separately connected to the processor 410 and the transceiver 420. Further, optionally, the OLT 110 further includes a bus system 440. The processor 410, the transceiver 420, and the memory 430 may be connected by using the bus system 440. The memory 440 may be configured to store an instruction. The processor 410 is configured to execute the instruction stored in the memory 440, to control the transceiver 420 to receive and send signals. The memory 440 may be further configured to cache data generated in a process of executing the instruction by the processor 410.

When the OLT 110 is used for downstream transmission, the processor 410 is configured to generate downstream data. The downstream data includes first indication information and at least two first data fields, the first indication information is used to indicate a modulation level of each first data field, a modulation level of any of the first data fields is corresponding to a modulation level of a destination device of the first data field, and the at least two first data fields include at least two first data fields at different modulation levels.

The transceiver 420 is configured to modulate the downstream data. Each first data field is modulated based on a modulation level of the first data field, and the first indication information is modulated based on a modulation level of the first indication information.

The transceiver 420 is further configured to send the modulated downstream data on a same wavelength channel.

When the OLT 110 is used for upstream transmission, the transceiver 420 is configured to receive upstream data. The upstream data includes a second data field and second indication information that is used to indicate a modulation level of the second data field. Specifically, the transceiver 420 is configured to receive an upstream frame. The upstream frame includes an upstream frame header and an upstream burst field. The upstream frame header includes the second indication information, and the upstream burst field includes the second data field. The upstream frame header may include a preamble field and a frame delimiter field. In an embodiment, a field corresponding to the second indication information may be newly added to the upstream frame header. For example, the second indication information, the preamble field, and the frame delimiter field may be mutually independent fields. In another embodiment, an existing field in the upstream frame header may be used as the second indication information. For example, the second indication information is the preamble field or the frame delimiter field.

The processor 410 is configured to determine a modulation level of the second data field based on the second indication information. In other words, the modulation level of the second data field in the upstream frame is determined based on the second indication information in the upstream frame.

The processor 410 is further configured to parse the second data field in a parsing manner corresponding to the modulation level of the second data field.

It can be learned from the foregoing embodiment that, the OLT 110 shown in FIG. 8 performs steps S200, S210, and S220 in the embodiment shown in FIG. 2 and steps S320, S330, and S340 in FIG. 6. Specifically, the processor 410 performs steps S200, S330, and S340, and the processor 410 further performs the conversion step in step S210. The transceiver 420 performs the modulation step in step S210, S220, and S320. For more details about the foregoing steps performed by the processor 410 and the transceiver 420, refer to the related descriptions of the embodiments of the data processing method and the accompanying drawings, and details are not described herein again.

In the embodiment of the present invention, an ONU at each modulation level interacting with the optical line terminal can correctly parse a first data field whose modulation level is the same as that of the ONU. Therefore, when ONUs at multiple modulation levels exist in an upgraded PON system, complexity and an insertion loss of optical components are reduced, thereby implementing a smooth upgrade.

The present invention further provides the ONU 130 described in the foregoing embodiments. As shown in FIG. 9, the ONU 130 includes a processor 510 and a transceiver 520, and the transceiver 520 is connected to the processor 510. Optionally, the ONU 130 further includes a memory 530. The memory 530 is separately connected to the processor 510 and the transceiver 520. Further, optionally, the ONU 130 further includes a bus system 540. The processor 510, the transceiver 520, and the memory 530 may be connected by using the bus system 540. The memory 540 may be configured to store an instruction. The processor 510 is configured to execute the instruction stored in the memory 540, to control the transceiver 520 to receive and send signals. The memory 540 may be further configured to cache data generated in a process of executing the instruction by the processor 510.

When the ONU 130 is used for downstream transmission, the transceiver 520 is configured to receive first indication information in downstream data sent by an optical line terminal. The downstream data includes the first indication information and at least two first data fields, the first indication information is used to indicate a modulation level of each first data field, a modulation level of any of the first data fields is corresponding to a modulation level of a destination device of the first data field, and the at least two first data fields include at least two first data fields at different modulation levels.

The processor 510 is configured to determine, based on the first indication information, a first data field whose modulation level is the same as that of the optical network unit.

The transceiver 520 is further configured to receive the determined first data field.

The processor 510 is further configured to parse the determined first data field.

When the ONU 130 is used for upstream transmission, the processor 510 is configured to generate upstream data, and the transceiver 520 is configured to send the upstream data to the OLT 110. The upstream data includes a second data field and second indication information that is used to indicate a modulation level of the second data field. Specifically, the transceiver 520 is configured to send an upstream frame. The upstream frame includes an upstream frame header and an upstream burst field. The upstream frame header includes the second indication information, and the upstream burst field includes the second data field. The upstream frame header may include a preamble field and a frame delimiter field. In an embodiment, a field corresponding to the second indication information may be newly added to the upstream frame header. For example, the second indication information, the preamble field, and the frame delimiter field may be mutually independent fields. In another embodiment, an existing field in the upstream frame header may be used as the second indication information. For example, the second indication information is the preamble field or the frame delimiter field.

It can be learned from the foregoing embodiment that, the ONU 130 shown in FIG. 9 performs steps S230, S240, and S250 in the embodiment shown in FIG. 2 and steps S300 and S310 in FIG. 6. Specifically, the processor 510 performs step S240, the step of parsing the first data field in step S250, and step S300. The transceiver 520 performs step S230, the step of receiving the first data field in step S250, and step S310. For more details about the foregoing steps performed by the processor 510 and the transceiver 520, refer to the related descriptions of the embodiments of the data processing method and the accompanying drawings, and details are not described herein again.

In this embodiment of the present invention, an ONU at each modulation level can correctly parse a first data field whose modulation level is the same as that of the ONU. Therefore, when ONUs at multiple modulation levels exist in an upgraded PON system, complexity and an insertion loss of optical components are reduced, thereby implementing a smooth upgrade.

The present invention further provides a passive optical network system. The passive optical network system includes the optical line terminal OLT and the optical network unit ONU that are described in the foregoing embodiments. For details, refer to the foregoing embodiments, and details are not described herein again.

An embodiment of the present invention further provides a downstream frame. For specific descriptions of the downstream frame, refer to the foregoing embodiments, and details are not described herein again.

An embodiment of the present invention further provides a data block. For specific descriptions of the data block, refer to the foregoing embodiments, and details are not described herein again.

An embodiment of the present invention further provides an upstream frame. For specific descriptions of the upstream frame, refer to the foregoing embodiments, and details are not described herein again.

An embodiment of the present invention further provides a communications apparatus. The communications apparatus may be an optical line terminal or a module, a component, a circuit, a component, or the like in the optical line terminal. When the communications apparatus is used for downstream transmission, the communications apparatus includes:
a generation module, configured to generate downstream data, where the downstream data includes first indication information and at least two first data fields, the first indication information is used to indicate a modulation level of each first data field, a modulation level of any of the first data fields is corresponding to a modulation level of a destination device of the first data field, and the at least two first data fields include at least two first data fields at different modulation levels;
a modulation module, configured to modulate the downstream data, where each first data field is modulated based on a modulation level of the first data field, and the first indication information is modulated based on a modulation level of the first indication information; and
a sending module, configured to send the modulated downstream data on a same wavelength channel.

Further, the generation module is specifically configured to generate a downstream frame. The downstream frame includes a frame header and a payload, the payload includes the first data fields at at least two modulation levels, the frame header includes the first indication information, and the first indication information is specifically used to indicate a modulation level of each first data field in the payload.

Further, in all the first data fields in each downstream frame, the first data field at a lower modulation level is closer to the frame header.

Further, the first indication information is specifically used to indicate a demarcation position between every two adjacent first data fields in the payload.

Further, the modulation module includes a conversion unit and a modulation unit. The conversion unit is configured to convert each bit group in the frame header into a bit sequence including N bits. Same bit groups are converted to a same bit sequence, and different bit groups are converted to different bit sequences; and a quantity of bits in each bit group in the frame header is a quantity of bits represented by each symbol period at a modulation level of the frame header, and N is a quantity of bits represented by each symbol period at a modulation level of the optical line terminal. The modulation unit is configured to modulate the converted frame header.

Further, the modulation level of the frame header is a lowest level among the modulation levels of all the first data fields.

Further, the downstream data includes at least two data blocks, each data block includes a data header and the first data field at one modulation level, the data header includes the first indication information, and the first indication information is used to indicate the modulation level of the first data field in the data block.

Further, the modulation module includes a conversion unit and a sending unit. The conversion unit is configured to convert each bit group in the first data field into a bit sequence including N bits. Same bit groups are converted to a same bit sequence, and different bit groups are converted to different bit sequences; and a quantity of bits in each bit group in the first data field is a quantity of bits represented by each symbol period at the modulation level of the first data field, and N is a quantity of bits represented by each symbol period at the modulation level of the optical line terminal. The modulation unit is configured to modulate the converted first data field.

When the communications apparatus is used for upstream transmission, the communications apparatus includes:
a receiving module, configured to receive upstream data; where the upstream data includes a second data field and second indication information that is used to indicate a modulation level of the second data field; specifically, the receiving module is configured to receive an upstream frame, the upstream frame includes an upstream frame header and an upstream burst field, the upstream frame header includes the second indication information, the upstream burst field includes the second data field, and the upstream frame header may include a preamble field and a frame delimiter field; in an embodiment, a field corresponding to the second indication information may be newly added to the upstream frame header, and for example, the second indication information, the preamble field, and the frame delimiter field may be mutually independent fields; and in another embodiment, an existing field in the upstream frame header may be used as the second indication information, and for example, the second indication information is the preamble field or the frame delimiter field;
a determining module, configured to determine a modulation level of the second data field based on the second indication information; that is, the modulation level of the second data field in the upstream frame is determined based on the second indication information in the upstream frame; and
a parsing module, configured to parse the second data field in a parsing manner corresponding to the modulation level of the second data field.

It can be learned from the foregoing embodiment that the communications apparatus performs steps S200, S210, and S220 in the embodiment shown in FIG. 2 and steps S320, S330, and S340 in FIG. 6. Specifically, the generation module performs step S200, the modulation module performs step S210, the sending module performs step S220, the receiving module performs step S320, the determining module performs step S330, and the parsing module performs step S340. For more details about the foregoing steps performed by the communications apparatus, refer to the related descriptions of the embodiments of the data processing method and the accompanying drawings, and details are not described herein again.

In this embodiment of the present invention, an ONU at each modulation level interacting with the communications apparatus can correctly parse a first data field whose modulation level is the same as that of the ONU. Therefore, when ONUs at multiple modulation levels exist in an upgraded PON system, complexity and an insertion loss of optical components are reduced, thereby implementing a smooth upgrade.

An embodiment of the present invention further provides a communications apparatus. The communications apparatus may be an optical network unit, an optical network terminal, or a module, a component, a circuit, a component, or the like in the optical network unit or the optical network terminal. When the communications apparatus is used for downstream transmission, the communications apparatus includes:
a transceiver module, configured to receive first indication information in downstream data sent by an optical line terminal on a same wavelength channel, where the downstream data includes the first indication information and first data fields at at least two modulation levels, and the first indication information is used to indicate each modulation level of the first data field;
a determining module, configured to determine, based on the first indication information, a first data field whose modulation level is the same as that of the optical network unit; where
the transceiver module is further configured to receive the determined first data field; and
a parsing module, configured to parse the determined first data field.

Further, the transceiver module is specifically configured to receive a frame header in a downstream frame sent by an optical line terminal on a same wavelength channel. The downstream frame includes the frame header and a payload, the payload includes the first data fields at at least two modulation levels, the frame header includes the first indication information, and the first indication information is specifically used to indicate a modulation level of each first data field in the payload.

Further, in all the first data fields in each downstream frame, the first data field at a lower modulation level is closer to the frame header.

Further, the first indication information is specifically used to indicate a demarcation position between every two adjacent first data fields in the payload.

Further, when the modulation level of the optical network unit is higher than the modulation level of the frame header, the transceiver module is specifically configured to demodulate the frame header based on a modulation level of the transceiver module; and convert each bit group in the frame header into a bit sequence including M bits. A quantity of bits in each bit group is a quantity of bits represented by each symbol period at the modulation level of the optical network unit, and M is a quantity of bits represented by each symbol period at the modulation level of the frame header.

Further, the modulation level of the frame header is a lowest level among the modulation levels of all the first data fields.

Further, the downstream data includes at least two data blocks, each data block includes a data header and the first data field at one modulation level, the data header includes the first indication information, and the first indication information is used to indicate the modulation level of the first data field in the data block.

When the communications apparatus is used for upstream transmission, the communications apparatus further includes a generation module, configured to generate upstream data. The transceiver module is specifically configured to send the upstream data to the optical line terminal. The upstream data includes a second data field and second indication information that is used to indicate a modulation level of the second data field. Specifically, the transceiver module is specifically configured to send an upstream frame. The upstream frame includes an upstream frame header and an upstream burst field. The upstream frame header includes the second indication information, and the upstream burst field includes the second data field. The upstream frame header may include a preamble field and a frame delimiter field. In an embodiment, a field corresponding to the second indication information may be newly added to the upstream frame header. For example, the second indication information, the preamble field, and the frame delimiter field may be mutually independent fields. In another embodiment, an existing field in the upstream frame header may be used as the second indication information. For example, the second indication information is the preamble field or the frame delimiter field.

It can be learned from the foregoing embodiment that the communications apparatus performs steps S230, S240, and S250 in the embodiment shown in FIG. 2 and steps S300 and S310 in FIG. 6. Specifically, the transceiver module performs steps S230 and S310, and the transceiver module is further configured to perform the step of receiving the first data field in step S250. The determining module is configured to perform step S240, and the parsing module is configured to perform the step of parsing the first data field in step S250. The generation module performs step S300. For more details about the foregoing steps performed by the communications apparatus, refer to the related descriptions of the embodiments of the data processing method and the accompanying drawings, and details are not described herein again.

In this embodiment of the present invention, a communications apparatus at each modulation level can correctly parse a first data field whose modulation level is the same as that of the communications apparatus. Therefore, when communications apparatuses at multiple modulation levels exist in an upgraded PON system, complexity and an insertion loss of optical components are reduced, thereby implementing a smooth upgrade.

In the foregoing embodiments, the description of each embodiment has respective focuses. For a part that is not described in detail in an embodiment, refer to related descriptions in other embodiments.

It should be noted that, to make the description brief, the foregoing method embodiments are expressed as a series of actions. However, a person skilled in the art should appreciate that the present invention is not limited to the described action sequence, because according to the present invention, some steps may be performed in other sequences or performed simultaneously. In addition, a person skilled in the art should also appreciate that all the embodiments described in the specification are example embodiments, and the related actions and modules are not necessarily mandatory to the present invention.

In the several embodiments provided in this application, it should be understood that the disclosed apparatus may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device, and may be specifically a processor in a computer device) to perform all or some of the steps of the foregoing methods described in the embodiments of the present invention. The foregoing storage medium may include any medium that can store program code, such as a USB flash drive, a removable hard disk, a magnetic disk, an optical disc, a read-only memory (ROM, Read-Only Memory), or a random access memory (RAM, Random Access Memory).

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention, as defined by the appended claims.

## Claims

1. A data processing method, wherein the method comprises:
generating (S200), by an optical line terminal, downstream data, wherein the downstream data comprises first indication information and at least two first data fields, the first indication information comprises several pieces of modulation level indication information which each is used to indicate one modulation level, one modulation level is corresponding to one modulation level of a destination device to which one first data field will be sent, and the several modulation levels comprise at least two different modulation levels;
modulating (S210), by the optical line terminal, the downstream data, wherein each first data field and its corresponding piece of modulation level indication information are modulated based on the modulation level indicated by the piece of modulation level indication information; and
sending (S220), by the optical line terminal, the modulated downstream data on a same wavelength channel.

2. The method according to claim 1, wherein the generating, by an optical line terminal, downstream data comprises: generating, by the optical line terminal, a downstream frame, wherein the downstream frame comprises at least two frame headers and at least two payloads, wherein each payload comprises one of the first data fields at one of the at least two modulation levels, the frame header comprises the first indication information, and the first indication information is specifically used to indicate the modulation level of each first data field in the payload.

3. A data processing method, wherein the method comprises:
receiving (S230), by an optical network unit, first indication information in downstream data sent by an optical line terminal, wherein the downstream data comprises the first indication information and at least two first data fields, the first indication information comprises several pieces of modulation level indication information which each is used to indicate one modulation level, one modulation level is corresponding to one modulation level of a destination device to which one first data field will be sent, and the several modulation levels comprise at least two different modulation levels; wherein each first data field and its corresponding piece of modulation level indication information is modulated based on the modulation level indicated by the piece of modulation level indication information;
determining (S240), by the optical network unit based on the first indication information, a first data field whose modulation level is the same as that of the optical network unit; and
receiving and parsing (S250), by the optical network unit, the determined first data field.

4. The method according to claim 3, wherein the receiving, by an optical network unit, first indication information in downstream data sent by an optical line terminal comprises: receiving, by the optical network unit, at least two frame headers in a downstream frame sent by the optical line terminal, wherein the downstream frame comprises the frame headers and at least two payloads, wherein each payload comprises one of the first data fields at one of the at least two modulation levels, the frame header comprises the first indication information, and the first indication information is specifically used to indicate the modulation level of each first data field in the payload.

5. An optical line terminal, wherein the optical line terminal comprises:
a processor (410), configured to generate downstream data, wherein the downstream data comprises first indication information and at least two first data fields, the first indication information comprises several pieces of modulation level indication information which each is used to indicate one modulation level, one modulation level is corresponding to one modulation level of a destination device to which one first data field will be sent, and the several modulation levels comprise at least two different modulation levels; and
a transceiver (420), configured to modulate the downstream data, wherein each first data field and its corresponding piece of modulation level indication information are modulated based on the modulation level indicated by the piece of modulation level indication information; wherein
the transceiver is further configured to send the modulated downstream data on a same wavelength channel.

6. The optical line terminal according to claim 5, wherein the processor is specifically configured to generate a downstream frame, wherein the downstream frame comprises at least two frame headers and at least two payloads, wherein each payload comprises one of the first data fields at one of the at least two modulation levels, the frame header comprises the first indication information, and the first indication information is specifically used to indicate the modulation level of each first data field in the payload.

7. A passive optical network system, wherein the passive optical network system comprises the optical line terminal according to any one of claims 5 to 6 and an optical network unit.

## Patentansprüche

1. Datenverarbeitungsverfahren, wobei das Verfahren umfasst:
Erzeugen (S200), durch ein optisches Leitungsterminal, von Downstream-Daten, wobei die Downstream-Daten erste Anzeigeinformationen und mindestens zwei erste Datenfelder umfasst, die erste Anzeigeinformation mehrere Modulationsstufen-Anzeigeinformationen umfasst, die jeweils verwendet werden, um eine Modulationsstufe anzuzeigen, wobei eine Modulationsstufe einer Modulationsstufe einer Zielvorrichtung entspricht, an die ein erstes Datenfeld gesendet wird, und die mehreren Modulationsstufen mindestens zwei unterschiedliche Modulationsstufen umfassen;
Modulieren (S210) der Downstream-Daten durch das optische Leitungsterminal, wobei jedes erste Datenfeld und seine entsprechende Modulationsstufen-Anzeigeinformation basierend auf der Modulationsstufe moduliert werden, die durch die Modulationsstufen-Anzeigeinformation angezeigt wird; und
Senden (S220) der modulierten Downstream-Daten auf einem gleichen Wellenlängenkanal durch das optische Leitungsterminal.

2. Verfahren nach Anspruch 1, wobei das Erzeugen von Downstream-Daten durch ein optisches Leitungsterminal umfasst: Erzeugen eines Downstream-Rahmens durch das optische Leitungsterminal, wobei der Downstream-Rahmen mindestens zwei Rahmen-Header und mindestens zwei Nutzlasten umfasst, wobei jede Nutzlast eines der ersten Datenfelder auf einer der mindestens zwei Modulationsstufen umfasst, der Rahmen-Header die erste Anzeigeinformation umfasst und die erste Anzeigeinformation spezifisch verwendet wird, um die Modulationsstufe jedes ersten Datenfeldes in der Nutzlast anzuzeigen.

3. Datenverarbeitungsverfahren, wobei das Verfahren umfasst:
Empfangen (S230), durch eine optische Netzwerkeinheit, einer ersten Anzeigeinformation in Downstream-Daten, die von einem optischen Leitungsterminal gesendet werden, wobei die Downstream-Daten die erste Anzeigeinformation und mindestens zwei erste Datenfelder umfasst, die erste Anzeigeinformation mehrere Teile von Modulationsstufen-Anzeigeinformationen umfasst, die jeweils verwendet werden, um eine Modulationsstufe anzuzeigen, wobei eine Modulationsstufe einer Modulationsstufe einer Zielvorrichtung entspricht, an die ein erstes Datenfeld gesendet wird, und die mehreren Modulationsstufen mindestens zwei verschiedene Modulationsstufen umfassen; wobei jedes erste Datenfeld und seine entsprechende Modulationsstufen-Anzeigeinformation basierend auf der Modulationsstufe moduliert werden, die durch die Modulationsstufen-Anzeigeinformation angegeben wird;
Bestimmen (S240), durch die optische Netzwerkeinheit basierend auf der ersten Anzeigeinformation, eines ersten Datenfelds, dessen Modulationsstufe gleich der der optischen Netzwerkeinheit ist; und
Empfangen und Parsen (S250) des bestimmten ersten Datenfelds durch die optische Netzwerkeinheit.

4. Verfahren nach Anspruch 3, wobei das Empfangen, durch eine optische Netzwerkeinheit, einer ersten Anzeigeinformation in Downstream-Daten, die von einem optischen Leitungsterminal gesendet werden, umfasst: Empfangen, durch die optische Netzwerkeinheit, von mindestens zwei Rahmen-Headern in einem Downstream-Rahmen, der von dem optischen Leitungsterminal gesendet wird, wobei der Downstream-Rahmen die Rahmen-Header und mindestens zwei Nutzlasten umfasst, wobei jede Nutzlast eines der ersten Datenfelder auf einer der mindestens zwei Modulationsstufen umfasst, der Rahmen-Header die erste Anzeigeinformation umfasst und die erste Anzeigeinformation spezifisch verwendet wird, um die Modulationsstufe jedes ersten Datenfelds in der Nutzlast anzuzeigen.

5. Optisches Leitungsterminal, wobei das optische Leitungsterminal umfasst:
einen Prozessor (410), der konfiguriert ist, um Downstream-Daten zu erzeugen, wobei die Downstream-Daten ein erste Anzeigeinformation und mindestens zwei erste Datenfelder umfasst, die erste Anzeigeinformation mehrere Elemente einer Modulationsstufen-Anzeigeinformation umfasst, die jeweils verwendet werden, um eine Modulationsstufe anzuzeigen, wobei eine Modulationsstufe einer Modulationsstufe einer Zielvorrichtung entspricht, an die ein erstes Datenfeld gesendet wird, und die mehreren Modulationsstufen mindestens zwei unterschiedliche Modulationsstufen umfassen; und
einen Transceiver (420), der konfiguriert ist, um die Downstream-Daten zu modulieren, wobei jedes erste Datenfeld und seine entsprechende Modulationsstufen-Anzeigeinformation basierend auf der Modulationsstufe moduliert werden, die durch die Modulationsstufen-Anzeigeinformation angezeigt wird; wobei
der Transceiver ferner konfiguriert ist, um die modulierten Downstream-Daten auf einem gleichen Wellenlängenkanal zu senden.

6. Optisches Leitungsterminal nach Anspruch 5, wobei der Prozessor spezifisch konfiguriert ist, um einen Downstream-Rahmen zu erzeugen, wobei der Downstream-Rahmen mindestens zwei Rahmen-Header und mindestens zwei Nutzlasten umfasst, wobei jede Nutzlast eines der ersten Datenfelder auf einer der mindestens zwei Modulationsstufen umfasst, der Rahmen-Header die erste Anzeigeinformation umfasst und die erste Anzeigeinformation spezifisch verwendet wird, um die Modulationsstufe jedes ersten Datenfelds in der Nutzlast anzuzeigen.

7. Passives optisches Netzwerksystem, wobei das passive optische Netzwerksystem das optische Leitungsterminal nach einem der Ansprüche 5 bis 6 und eine optische Netzwerkeinheit umfasst.

## Revendications

1. Procédé de traitement de données, dans lequel le procédé comprend :
la génération (S200), par un terminal de ligne optique, de données en aval, dans lequel les données en aval comprennent des premières informations d'indication et au moins deux premiers champs de données, les premières informations d'indication comprennent de multiples éléments d'informations d'indication de niveau de modulation qui sont chacun utilisés pour indiquer un niveau de modulation, un niveau de modulation correspond à un niveau de modulation d'un dispositif de destination auquel un premier champ de données sera envoyé, et les multiples niveaux de modulation comprennent au moins deux niveaux de modulation différents ;
la modulation (S210), par le terminal de ligne optique, des données en aval, dans lequel chaque premier champ de données et son élément correspondant d'informations d'indication de niveau de modulation sont modulés sur la base du niveau de modulation indiqué par l'élément d'informations d'indication de niveau de modulation ; et
l'envoi (S220), par le terminal de ligne optique, des données en aval modulées sur un canal de longueur d'onde identique.

2. Procédé selon la revendication 1, dans lequel la génération, par un terminal de ligne optique, de données en aval comprend : la génération, par le terminal de ligne optique, d'une trame en aval, dans lequel la trame en aval comprend au moins deux en-têtes de trame et au moins deux charges utiles, dans lequel chaque charge utile comprend l'un parmi les premiers champs de données à l'un parmi les au moins deux niveaux de modulation, l'en-tête de trame comprend les premières informations d'indication, et les premières informations d'indication sont spécifiquement utilisées pour indiquer le niveau de modulation de chaque premier champ de données dans la charge utile.

3. Procédé de traitement de données, dans lequel le procédé comprend :
la réception (S230), par une unité de réseau optique, de premières informations d'indication dans des données en aval envoyées par un terminal de ligne optique, dans lequel les données en aval comprennent les premières informations d'indication et au moins deux premiers champs de données, les premières informations d'indication comprennent de multiples éléments d'informations d'indication de niveau de modulation qui sont chacun utilisés pour indiquer un niveau de modulation, un niveau de modulation correspond à un niveau de modulation d'un dispositif de destination auquel un premier champ de données sera envoyé, et les multiples niveaux de modulation comprennent au moins deux niveaux de modulation différents ; dans lequel chaque premier champ de données et son élément correspondant d'informations d'indication de niveau de modulation sont modulés sur la base du niveau de modulation indiqué par l'élément d'informations d'indication de niveau de modulation ;
la détermination (S240), par l'unité de réseau optique sur la base des premières informations d'indication, d'un premier champ de données dont le niveau de modulation est identique à celui de l'unité de réseau optique ; et
la réception et l'analyse (S250), par l'unité de réseau optique, du premier champ de données déterminé.

4. Procédé selon la revendication 3, dans lequel la réception, par une unité de réseau optique, de premières informations d'indication dans des données en aval envoyées par un terminal de ligne optique comprend : la réception, par l'unité de réseau optique, d'au moins deux en-têtes de trame dans une trame en aval envoyée par le terminal de ligne optique, dans lequel la trame en aval comprend les en-têtes de trame et au moins deux charges utiles, dans lequel chaque charge utile comprend l'un parmi les premiers champs de données à l'un parmi les au moins deux niveaux de modulation, l'en-tête de trame comprend les premières informations d'indication, et les premières informations d'indication sont spécifiquement utilisées pour indiquer le niveau de modulation de chaque premier champ de données dans la charge utile.

5. Terminal de ligne optique, dans lequel le terminal de ligne optique comprend :
un processeur (410), configuré pour générer des données en aval, dans lequel les données en aval comprennent des premières informations d'indication et au moins deux premiers champs de données, les premières informations d'indication comprennent de multiples éléments d'informations d'indication de niveau de modulation qui sont chacun utilisés pour indiquer un niveau de modulation, un niveau de modulation correspond à un niveau de modulation d'un dispositif de destination auquel un premier champ de données sera envoyé, et les multiples niveaux de modulation comprennent au moins deux niveaux de modulation différents ; et
un émetteur-récepteur (420), configuré pour moduler les données en aval, dans lequel chaque premier champ de données et son élément correspondant d'informations d'indication de niveau de modulation sont modulés sur la base du niveau de modulation indiqué par l'élément d'informations d'indication de niveau de modulation ; dans lequel
l'émetteur-récepteur est en outre configuré pour envoyer les données en aval modulées sur un canal de longueur d'onde identique.

6. Terminal de ligne optique selon la revendication 5, dans lequel le processeur est spécifiquement configuré pour générer une trame en aval, dans lequel la trame en aval comprend au moins deux en-têtes de trame et au moins deux charges utiles, dans lequel chaque charge utile comprend l'un parmi les premiers champs de données à l'un parmi les au moins deux niveaux de modulation, l'en-tête de trame comprend les premières informations d'indication, et les premières informations d'indication sont spécifiquement utilisées pour indiquer le niveau de modulation de chaque premier champ de données dans la charge utile.

7. Système de réseau optique passif, dans lequel le système de réseau optique passif comprend le terminal de ligne optique selon l'une quelconque des revendications 5 à 6 et une unité de réseau optique.
